# EUROPÄISCHE PATENTSCHRIFT

(11) **EP 1 851 466 B1**
(45) Veröffentlichungstag und Bekanntmachung des Hinweises auf die Patenterteilung: **15.04.2009**
(21) Anmeldenummer: 06701301.1
(22) Anmeldetag: 04.01.2006
(51) Int. Cl.: F16H 61/10, F16H 61/688

(54) **VERFAHREN ZUR REALISIERUNG DER SCHALTUNGEN VON EINEM QUELLGANG IN EINEN ZIELGANG EINES DOPPELKUPPLUNGSGETRIEBES**
METHOD FOR CARRYING OUT GEAR SHIFTS FROM A SOURCE GEAR TO A TARGET GEAR OF A TWIN CLUTCH TRANSMISSION
PROCEDE POUR PASSER D'UN RAPPORT SOURCE A UN RAPPORT CIBLE DANS UNE TRANSMISSION A DOUBLE EMBRAYAGE

(30) Priorität: 11.02.2005 DE 102005006567
(43) Veröffentlichungstag der Anmeldung: 07.11.2007
(73) Patentinhaber: Volkswagen Aktiengesellschaft, 38436 Wolfsburg (DE)
(72) Erfinder: BOTHE, Edgar, 31224 Peine (DE); MÜLLER, Henning, 38518 Gifhorn (DE); GÄRTNER, Volker, 75449 Wurmberg (DE)
(74) Vertreter: Hübsch, Dirk
(86) Internationale Anmeldenummer: PCT/EP2006/000030
(87) Internationale Veröffentlichungsnummer: WO 2006/084530

(56) Entgegenhaltungen:
- WO-A-20/05008103
- US-A- 4 852 006
- US-A- 5 035 157
- US-A- 6 123 644

## Beschreibung

Die Erfindung betrifft ein Verfahren zur Realisierung der Schaltungen von einem Quellgang in einen Zielgang eines Doppelkupplungsgetriebes, wobei das Doppelkupplungsgetriebe mehrere auf zwei Getriebeeingangswellen verteilte Gänge aufweist, wobei sequentiell direkt aufeinander folgende Gänge unterschiedlichen Getriebeeingangswellen zugeordnet sind, insbesondere der ersten Eingangswelle der erste, dritte und/oder fünfte Gang und der zweiten Getriebeeingangswelle der zweite, vierte und/oder sechste Gang zugeordnet sind, wobei für jeden möglichen sequentiellen Gangwechsel jeweils eine in Abhängigkeit von der Fahrpedalstellung definierte Hochschalt- und Rückschaltschwelle, nämlich der für die jeweilige Hoch- bzw. Rückschaltung gültige Grenzwert als entsprechender Fahrzeuggeschwindigkeitswert in einem Steuergerät abgespeichert ist und wobei die während der Fahrt des Kraftfahrzeugs sich ändernde Fahrzeuggeschwindigkeit und die sich ändernde Fahrpedalstellung gemessen werden.

Die bisher im Stand der Technik bekannten Doppelkupplungsgetriebe sind so aufgebaut, dass diese zwei Getriebeeingangswellen aufweisen. Jeder Getriebeeingangswelle sind bestimmte Gänge zugeordnet. Im allgemeinen sind der ersten Getriebeeingangswelle der erste, dritte und fünfte Gang und der zweiten Getriebeeingangswelle der zweite, vierte bzw. sechste Gang zugeordnet. Die entsprechenden verschiedenen Gänge liegen also auf unterschiedlichen Teilgetrieben des Doppelkupplungsgetriebes. Die Schaltstrategie muß dies entsprechend berücksichtigen. Insbesondere müssen auch sogenannte "indirekte Schaltungen" durchgeführt werden, da sogenannte "direkte Schaltungen" nur zwischen Gängen unterschiedlicher Teilgetriebe möglich sind. Schaltungen zwischen Gängen, die auf einem bestimmten Teilgetriebe liegen, sind nur unter Zwischenschaltung eines Zwischenganges möglich. Im allgemeinen sind in Abhängigkeit der Fahrzeuggeschwindigkeit und der Fahrpedalstellung jeweils für mögliche sequentielle Gangwechsel definierte Hochschalt- und Rückschaltschwellen bzw. entsprechende Kennlinien in einem Steuergerät abgespeichert, wobei die während der Fahrt des Kraftfahrzeugs sich ändernde Fahrzeuggeschwindigkeit bzw. die sich ändernde Fahrpedalstellung gemessen werden, um durch einen entsprechenden Vergleich mit der Hochschaltschwelle bzw. der Rückschaltschwelle eine entsprechende Schaltung im Doppelkupplungsgetriebe automatisch zu realisieren.

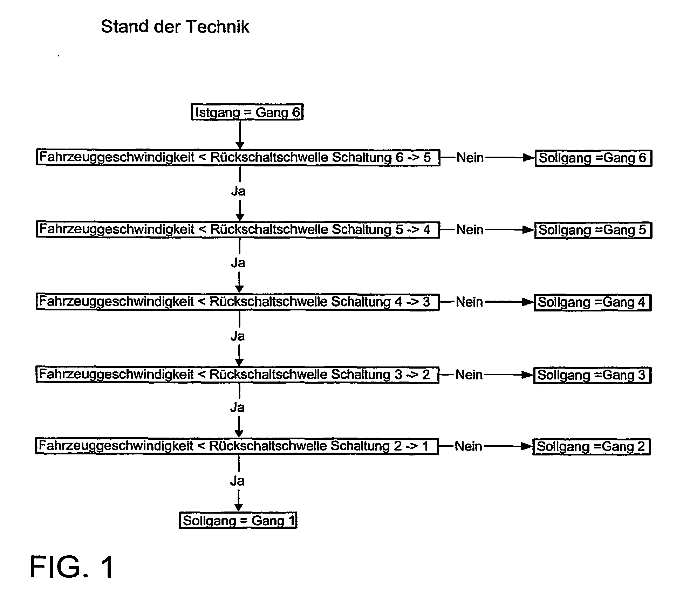

Die Fig. 1 zeigt nun die bereits im Stand der Technik bekannte Fahrstrategie zur Auswahl eines Ganges für eine Rückschaltung in einem bekannten Doppelkupplungsgetriebe. Das hier zu schaltende Doppelkupplungsgetriebe weist vzw. sechs Gänge auf, die entsprechend als "Gang1, Gang2 ... usw." bezeichnet sind. Ist nun in dem Doppelkupplungsgetriebe ein Quellgang, hier bspw. der sechste Gang "Gang6" eingelegt, wird nun der neue Zielgang des Doppelkupplungsgetriebes in Abhängigkeit der gemessenen aktuellen Fahrzeuggeschwindigkeit gewählt. Hierfür sind im Steuergerät entsprechende Rückschaltschwellen in Abhängigkeit der Fahrzeuggeschwindigkeit bzw. der Fahrpedalstellung abgespeichert, so wie bisher im Stand der Technik bekannt.

Gut in Fig. 1 erkennbar sind hier - schematisch als Blockschaltbild dargestellt -, die entsprechenden "Rückschaltschwellen" für die Schaltungen vom sechsten in den fünften Gang, also von 6→5, vom fünften in den vierten Gang 5→4, vom vierten in den dritten Gang 4→3, vom dritten in den zweiten Gang 3→2 und vom zweiten in den ersten Gang 2→1. Die einzelnen spezifischen Fahrzeuggeschwindigkeitswerte (Grenzwerte) für die jeweiligen Rückschaltschwellen sind in dem Steuergerät in Abhängigkeit spezifischer Fahrpedaistellungen abgespeichert. Anders ausgedrückt, für bestimmte Schaltungen bzw. Gangwechsel sind im Steuergerät in Abhängigkeit einer bestimmten Fahrpedalstellung bzw. in Abhängigkeit einer bestimmten Fahrzeuggeschwindigkeit entsprechende Rückschaltschwellen-Werte, im folgenden "Grenzwerte" genannt, abgespeichert. Die für eine spezifische Schaltung bspw. vom vierten in den dritten Gang 4→3 existierenden Werte, also die entsprechenden Grenzwerte, bilden entlang der Fahrpedalauslenkung von 0 bis 100 % dann eine bestimmte Rückschaltkennlinie. Zwischen den einzelnen Rückschaltkennlinien existieren also dazwischenliegende Bereiche, in die die jeweils aktuell gemessene Fahrzeuggeschwindigkeit fällt.

Wie aus Fig. 1 ersichtlich, wird nun für bspw. einen eingelegten sechsten Gang "Gang6" als Quellgang nun der entsprechende Zielgang wie folgt ermittelt. Zunächst wir die aktuelle Fahrzeuggeschwindigkeit gemessen. Dann wird die aktuelle Fahrzeuggeschwindigkeit verglichen mit dem Grenzwert der spezifischen Rückschaltschwelle für die Schaltung vom sechsten in den fünften Gang 6→5. Ist die aktuelle Fahrzeuggeschwindigkeit größer als der abgespeicherte Grenzwert dieser Rückschaltschwelle für die Schaltung vom sechsten in den fünften Gang, so wird der Zweig "Nein" beschritten und der sechste Gang, also "Gang6" beibehalten. Ist jedoch die aktuelle Fahrzeuggeschwindigkeit geringer als der Grenzwert der Rückschaltschwelle von 6→5, so wird der Zweig "Ja" beschritten und es wird die nächstfolgende Rückschaltschwelle für die Schaltung von dem fünften in den vierten Gang 5→4 abgefragt. Ist hier dann die aktuelle Fahrzeuggeschwindigkeit größer als der Grenzwert der Rückschaltschwelle von der Schaltung 5→4, so wird der Zweig "Nein" beschritten und der fünfte Gang als Zielgang gewählt. Ist aber die aktuelle Fahrzeuggeschwindigkeit kleiner als die Rückschaltschwelle der Schaltung 5→4, so wird der Zweig "ja" beschritten und die Werte anhand der nächstfolgenden Rückschaltschwelle Schaltung 4→3 überprüft ... usw. und zwar vzw. so lange, bis die aktuelle Fahrzeuggeschwindigkeit dann größer ist als eine bestimmte Rückschaltschwelle Schaltung Y→X. Erst dann wird der Zielgang X entsprechend gewählt. Fig. 1 verdeutlicht das oben beschriebene allgemein bereits bekannte Verfahren.

Aufgrund der bei einer Getriebesteuerung zu realisierenden Schaltstrategien sind im Steuergerät des Doppelkupplungsgetriebes die entsprechenden Hoch- und Rückschaltkennlinien aller Gänge in Abhängigkeit der entsprechenden Fahrpedalstellung abgespeichert, d.h. aus einer Hochschalt- bzw. Rückschaltkennlinie ergibt sich für eine bestimmte Fahrpedalstellung eines bestimmte Fahrzeuggeschwindigkeit, bei der eine bestimmte Hochschaltung bzw. Rückschaltung erfolgt. Diese jeweiligen "Grenzwerte" werden jeweils mit der aktuellen Fahrgeschwindigkeit verglichen, wobei diese jeweiligen punktuellen Grenzwerte auf der entsprechenden Hoch- bzw. Rückschaltkennlinie dann im folgenden als Hochschaltschwelle bzw. Rückschaltschwelle bezeichnet werden.

Um nun die Fahrstrategien, insbesondere in einem Doppelkupplungsgetriebe komfortmäßig zu realisieren, können die Hoch- und Rückschaltkennlinien unterschiedliche Verläufe aufweisen. Insbesondere bei einem Doppelkupplungsgetriebe kann es daher in der Praxis geschehen, dass bei Schaltungen, insbesondere einer "Zweifach-Rückschaltung" in einem Doppelkupplungsgetriebe dann indirekte Schaltungen durchgeführt werden, nämlich bspw. vom sechsten Gang, der auf der zweiten Getriebeeingangswelle liegt in den vierten Gang, der auf derselben Getriebeeingangswelle liegt über den fünften Gang.

Die Merkmale des Oberbegriffes des Anspruchs 1 sind aus der WO 2005/008103 A bekannt.

Der Erfindung liegt daher die Aufgabe zugrunde, das im Stand der Technik bekannte Verfahren, von dem die Erfindung ausgeht, derart auszugestalten und weiterzubilden, dass die Anzahl der indirekten Schaltungen bei einem Doppelkupplungsgetriebe von einem Quellgang zu einem Zielgang reduziert wird.

Die zuvor aufgezeigte Aufgabe ist nun zunächst dadurch gelöst, dass bei einer Soll-Rückschaltung von einem Quellgang in einen niedrigeren Gang der Zielgang nun dadurch bestimmt wird, dass die aktuelle Fahrgeschwindigkeit zunächst mit dem Grenzwert der nächstliegenden Rückschaltschwelle oder der sich in dieser Rückschaltrichtung anschließenden Rückschaltschwellen so lange verglichen wird, bis die aktuelle Fahrzeuggeschwindigkeit größer ist als der jeweilige Grenzwert mit der zuletzt überprüften Rückschaltschwelle, dass, wenn bei der zuletzt überprüften Rückschaltschwelle der höhere Gang dieser Rückschaltschwelle der gleichen Getriebeeingangswelle zugeordnet ist wie der Quellgang, dann die aktuelle Fahrzeuggeschwindigkeit mit dem Grenzwert der zu der zuletzt überprüften Rückschaltschwelle korrespondierenden Hochschaltschwelle verglichen wird und dass dann, wenn die aktuelle Fahrzeuggeschwindigkeit größer ist als dieser Grenzwert der Hochschaltschwelle, der höhere Gang dieser Hochschaltschwelle als Zielgang gewählt wird, aber wenn die aktuelle Fahrzeuggeschwindigkeit geringer ist als der Grenzwert der Hochschaltschwelle, der niedrigere Gang dieser Hochschaltschwelle als Zielgang gewählt wird. Das Vohergesagte gilt nun zunächst für eine Rückschaltung.

Für eine Hochschaltung ist die zuvor aufgezeigte Aufgabe nun dadurch gelöst, dass bei einer Soll-Hochschaltung von einem Quellgang in einen höheren Gang der Zielgang dadurch bestimmt wird, dass die aktuelle Fahrgeschwindigkeit zunächst mit dem Grenzwert der nächstliegenden Hochschaltschwelle oder der sich in dieser Hochschaltrichtung anschließenden nächsten Hochschaltschwellen so lange verglichen wird, bis die aktuelle Fahrzeuggeschwindigkeit geringer ist als der jeweilige Grenzwert der zuletzt überprüften Hochschaltschwelle, dass, wenn bei der zuletzt überprüften Hochschaltschwelle der niedrigere Gang dieser Hochschaltschwelle der gleichen Getriebeeingangswelle zugeordnet ist wie der Quellgang, dann die aktuelle Fahrzeuggeschwindigkeit mit dem Grenzwert der zuletzt überprüften Hochschaltschwelle korrespondierenden Rückschaltschwelle verglichen wird, und dass dann, wenn die aktuelle Fahrzeuggeschwindigkeit geringer ist als dieser Grenzwert der Rückschaltschwelle, der niedrigere Gang dieser Rückschaltschwelle als Zielgang gewählt wird, aber wenn die aktuelle Fahrzeuggeschwindigkeit größer ist als der Grenzwert der Rückschaltschwelle, der höhere Gang dieser Rückschaltschwelle als Zielgang gewählt wird.

Mit dem erfindungsgemäßen Verfahren können nun insbesondere die sogenannten indirekten Schaltungen bei einem Doppelkupplungsgetriebe reduziert werden. Das mit dem erfindungsgemäßen Verfahren betriebene Kraftfahrzeug wirkt mit dieser veränderten Schaltstrategie spontaner, die Schaltdauer wird insgesamt geringer. Bspw. kann bei einer beabsichtigten "Rückschaltung" vom sechsten Gang in den vierten Gang eine indirekte Schaltung vermieden werden, wenn nämlich festgestellt wird, dass die aktuelle Fahrgeschwindigkeit kleiner ist als die Hochschaltschwelle der Schaltung vom dritten in den vierten Gang 3→4. Hierbei kann dann sofort in den dritten Gang geschaltet werden. Die Anzahl der Schaltungen ist damit erheblich reduziert bzw. der Komfort und die Spontaneität erheblich verbessert und die eingangs beschriebenen Nachteile vermieden.

Es gibt nun eine Vielzahl von Möglichkeiten, das erfindungsgemäße Verfahren in vorteilhafter Art und Weise auszugestalten und weiterzubilden. Hierfür darf zunächst auf die Patentansprüche 1 und 2 verwiesen werden. Im folgenden soll nun ein bevorzugtes Ausführungsbeispiel der Erfindung anhand der folgenden Zeichnung und der dazugehörenden Beschreibung näher erläutert werden. In den Zeichnung zeigt:
- Fig. 1: eine im Stand der Technik bekannte Schaltstrategie für eine Rückschaltung eines Doppelkupplungsgetriebes,
- Fig. 2a: eine Schaltstrategie gemäß dem erfindungsgemäßen Verfahren und
- Fig.2b: ein schematisches Diagramm zur Verdeutlichung der Hochschalt- und Rückschaltschwellen bzw. der entsprechenden im Steuergerät abgespeicherten Hoch- und Rückschaltkennlinien in schematischer Darstellung.

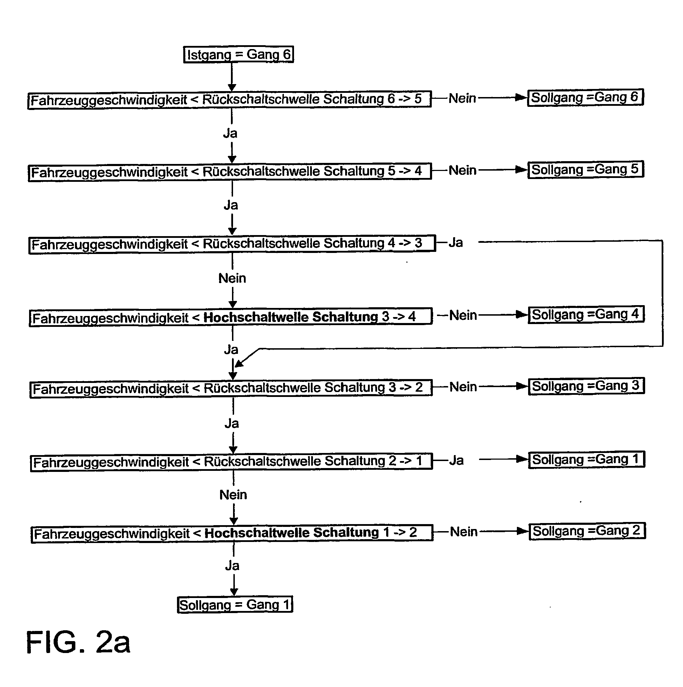

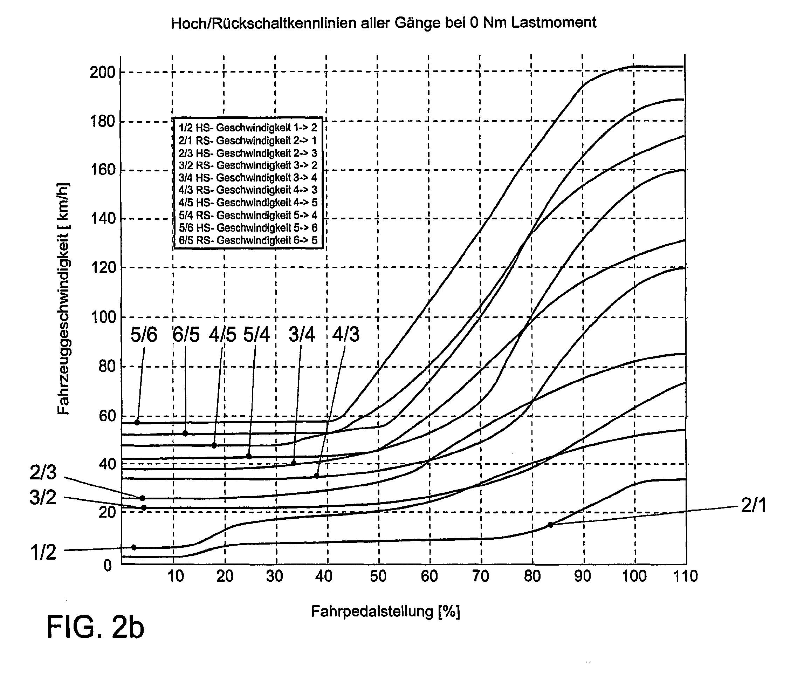

Während Fig. 1 das bereits zuvor eingangs beschriebene im Stand der Technik bekannte Verfahren darstellt, sollen die Fig. 2a und 2b das erfindungsgemäße Verfahren verdeutlichen.

Bevor auf die Fig. 2a und auf das erfindungsgemäße Verfahren im einzelnen näher eingegangen wird, dürfen zuvor anhand der Fig. 2b bestimmte Ausdrücke und/oder Bezeichnungen nochmals erläutert bzw. definiert werden.

In Fig. 2b ist auf der X-Achse die Fahrpedalstellung dargestellt und auf der Y-Achse die Fahrzeuggeschwindigkeit. Gut ersichtlich dargestellt sind auch entsprechende Hochschaltkennlinien bzw. Rückschaltkennlinien für die Gänge 1 bis 6. So ist bspw. die Hochschaltkennlinie 1/2, die Rückschaltkennlinie 2/1 wie auch die Rückschaltkennlinie 4/3, die Hochschaltkennlinie 3/4 und auch die übrigen Schaltkennlinien gut ersichtlich dargestellt. Ganz allgemein gilt, dass eine entsprechende Schaltkennlinie A/B mit A<B als Hochschaltkennlinie und mit A>B als Rückschaltkennlinie dargestellt ist. Die einzelnen Hochschalt- bzw. Rückschaltkennlinien sind hier für die Realisierung der Schaltungen von einem Quellgang in einem Zielgang für ein nicht näher dargestelltes Doppelkupplungsgetriebe dargestellt.

Das Doppelkupplungsgetriebe weist mehrere auf zwei Getriebeeingangswellen (zwei Teilgetrieben) verteilte Gänge auf, hier vzw. sechs Vorwärts-Gangstufen, insbesondere 6 Gänge. Sequentiell direkt aufeinander folgende Gänge sind vzw. unterschiedlichen Getriebeeingangswellen zugeordnet, wobei für jeden möglichen sequentiellen Gangwechsel A/B jeweils eine in Abhängigkeit von der Fahrpedalstellung definierte Hochschalt- und Rückschaltschwelle im Steuergerät abgespeichert ist. Hierbei wird unter dem Begriff "Hochschaltschwelle" bzw. "Rückschaltschwelle" der für die jeweilige Schaltung gültige Grenzwert, der als entsprechender Fahrzeuggeschwindigkeitswert im Steuergerät abgespeichert ist, verstanden. Anders ausgedrückt, jeder einzelnen Fahrpedalstellung sind für eine bestimmte Hochschaltung bzw. für eine bestimmte Rückschaltung in Abhängigkeit unterschiedliche Hochschalt- bzw. Rückschaltschwell-Werte, die im folgenden als Grenzwerte bezeichnet werden, entsprechende Fahrzeuggeschwindigkeitswerte abgespeichert. Dabei sind jeder Rückschaltschwelle bzw. jeder Hochschaltschwelle jeweils ein niedriger und ein höherer Gang des jeweiligen sequentiellen Gangswechsels A→B zugeordnet.

Die vzw. über eine Fahrpedalstellung von 0 bis 100 %, bspw. für die Hochschaltung von 1→2 abgespeicherten Werte ergeben die Hochschaltkennlinie 1/2. Für die Rückschaltkennlinie 2/1 usw. gilt ähnliches, also eine jeweilige Rückschaltkennlinie A/B ist gebildet aus mehreren Rückschaltschwellen-/Werten, die als Grenzwerte über den gesamten Fahrpedalweg für diese spezifische Rückschaltung A/B abgespeichert sind. So ist bspw. die Rückschaltkennlinie 2/1 gebildet aus spezifischen Fahrzeuggeschwindigkeitswerten über den Fahrpedalweg, so dass die Rückschaltkennlinie 2/1 und aus der Fig. 2b ersichtlich ist. Für die übrigen Hochschalt- bzw. Rückschaltkennlinien A/B, wie aus Fig. 2b gilt ähnliches bzw. entsprechendes.

Die Schaltungen in einem Doppelkupplungsgetriebe sind nun dadurch optimiert bzw. insbesondere indirekte Schaltungen bei einem Doppelkupplungsgetriebe dadurch reduziert, dass nun bei einer Soll-Rückschaltung von einem Quellgang in einen niedrigeren Gang der Zielgang nun dadurch bestimmt wird, dass die aktuelle Fahrgeschwindigkeit zunächst mit dem Grenzwert der nächstliegenden Rückschaltschwelle oder der sich in dieser Rückschaltrichtung anschließenden Rückschaltschwellen so lange verglichen wird bis die aktuelle Fahrzeuggeschwindigkeit größer ist als der jeweilige Grenzwert mit der zuletzt überprüften Rückschaltschwelle, dass, wenn bei der zuletzt überprüften Rückschaltschwelle der höhere Gang dieser Rückschaltschwelle der gleichen Getriebeeingangswelle zugeordnet ist wie der Quellgang, dann die aktuelle Fahrzeuggeschwindigkeit mit dem Grenzwert der zu der zuletzt überprüften Rückschaltschwelle korrespondierenden Hochschaltschwelle verglichen wird, und dass dann, wenn die aktuelle Fahrzeuggeschwindigkeit größer ist als dieser Grenzwert der Hochschaltschwelle der höhere Gang dieser Hochschaltschwelle als Zielgang gewählt wird, aber wenn die aktuelle Fahrzeuggeschwindigkeit geringer ist als der Grenzwert der Hochschaltschwelle, der niedrigere Gang dieser Hochschaltschwelle als Zielgang gewählt wird.

Das zuvor beschriebene grundlegende Prinzip der Erfindung darf nun ausführlicher erläutert werden anhand der Fig. 2a:

Die Fig. 2a zeigt eine Soll-Rückschaltung von einem Quellgang, nämlich dem sechsten Gang "Gang6" in einen niedrigeren Gang, nämlich in einen nunmehr zu bestimmenden Zielgang. Der Zielgang wird nun dadurch bestimmt, dass zunächst die aktuelle Fahrgeschwindigkeit des Kraftfahrzeuges mit dem Grenzwert der nächstliegenden Rückschaltschwelle verglichen wird. Dies ist im Fall der Fig. 2b die Rückschaltschwelle der Schaltung 6→5. Ergibt die Überprüfung, dass die aktuelle Fahrzeuggeschwindigkeit größer ist als der jeweilige Grenzwert dieser Rückschaltschwelle, so wird der Zweig "Nein" beschritten und der sechste Gang "Gang6" bleibt im Doppelkupplungsgetriebe eingelegt. Ergibt die Überprüfung, dass die aktuelle Fahrzeuggeschwindigkeit größer ist als die Rückschaltschwelle der Schaltung 6→5 wird der Zweig "Ja" beschritten und die nächste Überprüfung erfolgt, nämlich die aktuelle Fahrgeschwindigkeit wird nur mit dem Grenzwert der nächstliegenden - in Rückschaltrichtung gesehen - sich anschließenden Rückschaltschwelle, nunmehr der Rückschaltschwelle der Schaltung 5→4 verglichen. Ergibt dieser Vergleich, dass die aktuelle Fahrzeuggeschwindigkeit größer ist als der entsprechende Grenzwert der Rückschaltschelle der Schaltung 5→4. so wird der Zweig "Nein" beschritten und der fünfte Gang "Gang5" eingelegt. Im anderen Fall wird der Zweig "Ja" beschritten und nunmehr die aktuelle Fahrzeuggeschwindigkeit mit dem Grenzwert der Rückschaltschwelle für die Schaltung 4→3 verglichen. Dieser Vergleich läuft zunächst in Rückschaltrichtung für jede sich anschließende Rückschaltschwelle so lange, bis die aktuelle Fahrzeuggeschwindigkeit größer ist als der jeweilige Grenzwert mit der zuletzt verglichenen Rückschaltschwelle.

Dann wird - wie in Fall der Fig. 2a - nunmehr der Zweig "Nein" beschritten und nun nach dem Vergleich der aktuellen Fahrzeuggeschwindigkeit mit der Rückschaltschwelle Schaltung 4→3 die aktuelle Fahrzeuggeschwindigkeit mit der nunmehr zu dieser Rückschaltschwelle korrespondierenden Hochschaltschwelle Schaltung 3→4 verglichen. Ist nun die aktuelle Fahrzeuggeschwindigkeit größer als dieser Grenzwert der Hochschaltschwelle, so wird der Zweig "Nein" beschritten und der höhere Gang dieser Hochschaltschwelle Schaltung 3→4, also nunmehr der vierte Gang als Zielgang gewählt. Im Gegenzug wird aber, wenn die aktuelle Fahrzeuggeschwindigkeit geringer ist als der Grenzwert der Hochschaltschwelle 3→4 der niedrigere Gang dieser Hochschaltschwelle 3→4 der Zweig "Ja" beschritten und als Zielgang gewählt, also im Fall hier der dritte Gang "Gang3".

Das Grundprinzip der Erfindung geht also dahin, nachdem die aktuelle Fahrzeuggeschwindigkeit mit einem jeweiligen Grenzwert einer Rückschaltschwelle verglichen worden ist, dann nochmals die aktuelle Fahrzeuggeschwindigkeit mit der zu dieser Rückschaltschwelle A/B korrespondierenden Hochschaltschwelle B/A zu vergleichen, um nämlich dann zu überprüfen, ob es Sinn macht, den durch die Hochschaltschwelle definierten niedrigeren oder höheren Gang auszuwählen. Auf diese Art und Weise werden innerhalb eines Doppelkupplungsgetriebes indirekte Schaltungen vermieden. Wenn nämlich dieser zusätzliche Vergleich mit dem Grenzwert der jeweiligen entsprechenden Hochschaltschwelle insbesondere dann durchgeführt wird, wenn bei der zuletzt überprüften Rückschaltschwelle der höhere Gang dieser Rückschaltschwelle der gleichen Getriebeeingangswelle zugeordnet ist wie der ursprüngliche Quellgang. Das hier geschilderte Grundprinzip gilt selbstverständlich auch für andere Rückschaltungen, also nicht nur für die Rückschaltung vom sechsten in den dritten bzw. vierten Gang, sondern auch bspw. vom fünften in den zweiten Gang, wobei hier dann der zusätzliche Vergleich mit dem Grenzwert der jeweiligen entsprechenden Hochschaltschwelle vzw. nach Überprüfung der Rückschaltschwelle 3→2 erfolgt.

Wie aus Fig. 2a ersichtlich ist, kann - bei weiterer Verminderung der aktuellen Fahrzeuggeschwindigkeit - zusätzlich dann hier auch nach der Rückschaltschwelle Schaltung 2→1 dann hier die zusätzliche Überprüfung über die Hochschaltwelle Schaltung 1→2 erfolgen, so wie dargestellt.

Das oben beschriebene Prinzip gilt nicht nur für die Rückschaltung eines Doppelkupplungsgetriebes, sondern kann auch beim Hochschaltvorgang des Doppelkupplungsgetriebes verwirklicht werden. Hierfür gilt dann, dass bei einer Soll-Hochschaltung von einem Quellgang in einen höheren Gang der Zielgang nun dadurch bestimmt wird, dass die aktuelle Fahrgeschwindigkeit zunächst mit dem Grenzwert der nächstliegenden Hochschaltschwelle oder der sich in dieser Hochschaltrichtung anschließenden Hochschaltschwellen so lange verglichen wird bis die aktuelle Fahrzeuggeschwindigkeit geringer ist als der jeweilige Grenzwert der zuletzt überprüften Hochschaltschwelle, dass, wenn bei der zuletzt überprüften Hochschaltschwelle der niedrigere Gang dieser Hochschaltschwelle der gleichen Getriebeeingangswelle zugeordnet ist wie der Quellgang, dann die aktuelle Fahrzeuggeschwindigkeit mit dem Grenzwert der zuletzt überprüften Hochschaltschwelle korrespondierenden Rückschaltschwelle verglichen wird und dass dann, wenn die aktuelle Fahrzeuggeschwindigkeit geringer ist als dieser Grenzwert der Rückschaltschwelle, der niedrigere Gang dieser Rückschaltschwelle als Zielgang gewählt wird, aber wenn die aktuelle Fahrzeuggeschwindigkeit größer ist als der Grenzwert der Rückschaltschwelle, der höhere Gang dieser Rückschaltschwelle als Zielgang gewählt wird. Vzw. wird dieser zusätzliche Vergleich mit dem Grenzwert der jeweiligen Rückschaltschwelle dann durchgeführt, wenn bei zuletzt überprüfter Hochschaltschwelle der niedrigere Gang dieser Hochschaltschwelle der gleichen Getriebeeingangswelle zugeordnet ist wie der Quellgang.

Zur Durchführung des Verfahrens ist vzw. ein entsprechendes Steuergerät vorgesehen, dem jeweils die sich aktuell verändernden Fahrparameter des Kraftfahrzeugs aktuell über Sensoren und entsprechende Steuerleitungen zugeführt werden. Das Steuergerät weist vzw. einen Mikroprozessor und eine Speichereinheit auf, wobei in der Speichereinheit die Hochschalt- und Rückschaltkennlinien bzw. die Hochschaltschwellen und Rückschaltschwellen, also die jeweiligen Grenzwerte in Abhängigkeit der Fahrpedalstellung abgespeichert sind, insbesondere zu jeder Fahrpedalstellung für bestimmte Gangstufenwechsel entsprechende Grenzwerte/Fahrzeuggeschwindigkeitswerte abgespeichert sind, so wie aus Fig. 2b ersichtlich bzw. hierzu erläutert. In der Prozessoreinheit des Steuergerätes werden dann gemäß der oben beschriebenen Fahrstrategie die entsprechenden Vergleiche durchgeführt, die dann - im Endeffekt dazu führen, dass unnötige Schaltungen in einem Doppelkupplungsgetriebe vermieden werden können.

## Patentansprüche

1. Verfahren zur Realisierung der Schaltungen von einem Quellgang in einen Zielgang eines Doppelkupplungsgetriebes, wobei das Doppelkupplungsgetriebe mehrere auf zwei Getriebeeingangswellen verteilte Gänge aufweist, wobei sequentiell direkt aufeinanderfolgende Gänge unterschiedlichen Getriebeeingangswellen zugeordnet sind, insbesondere der ersten Getriebeeingangswelle der erste, dritte und/oder fünfte Gang und der zweiten Getriebeeingangswelle der zweite, vierte und/oder sechste Gang zugeordnet sind, wobei für jeden möglichen sequentiellen Gangwechsel jeweils eine in Abhängigkeit von der Fahrpedalstellung definierte Hochschalt- und Rückschaltschwelle, nämlich der für die jeweilige Hoch- bzw. Rückschaltung gültige Grenzwert als entsprechender Fahrzeuggeschwindigkeitswert in einem Steuergerät abgespeichert ist und wobei die während der Fahrt des Kraftfahrzeuges sich ändernde Fahrzeuggeschwindigkeit und die sich ändernde Fahrpedalstellung gemessen werden, **dadurch gekennzeichnet, dass** bei einer Soll-Rückschaltung von einem Quellgang in einen niedrigeren Gang der Zielgang nun **dadurch** bestimmt wird, dass die aktuelle Fahrgeschwindigkeit zunächst mit dem Grenzwert der nächstliegenden Rückschaltschwelle oder der sich in dieser Rückschaltrichtung anschließenden Rückschaltschwellen solange verglichen wird bis die aktuelle Fahrzeuggeschwindigkeit größer ist als der jeweilige Grenzwert der zuletzt überprüften Rückschaltschwelle, dass, wenn bei der zuletzt überprüften Rückschaltschwelle der höhere Gang dieser Rückschaltschwelle der gleichen Getriebeeingangswelle zugeordnet ist wie der Quellgang, dann die aktuelle Fahrzeuggeschwindigkeit mit dem Grenzwert der zu der zuletzt überprüften Rückschaltschwelle korrespondierenden Hochschaltschwelle verglichen wird, und dass dann, wenn die aktuelle Fahrzeuggeschwindigkeit größer ist als dieser Grenzwert der Hochschaltschwelle der höhere Gang dieser Hochschaltschwelle als Zielgang gewählt wird, aber wenn die aktuelle Fahrzeuggeschwindigkeit geringer ist als der Grenzwert der Hochschaltschwelle der niedrigere Gang dieser Hochschaltschwelle als Zielgang gewählt wird.

2. Verfahren zur Realisierung der Schaltungen von einem Quellgang in einen Zielgang eines Doppelkupplungsgetriebes, insbesondere nach Anspruch 1, wobei das Doppelkupplungsgetriebe mehrere auf zwei Getriebeeingangswellen verteilte Gänge aufweist, wobei sequentiell direkt aufeinanderfolgende Gänge unterschiedlichen Getriebeeingangswellen zugeordnet sind, insbesondere der ersten Getriebeeingangswelle der erste, dritte und/oder fünfte und der zweiten Getriebeeingangswelle der zweite, vierte und/oder sechste Gang zugeordnet sind, wobei für jeden möglichen sequentiellen Gangwechsel jeweils eine in Abhängigkeit von der Fahrpedalstellung definierte Hochschalt- und Rückschaltschwelle, nämlich der für die jeweilige Hoch- bzw. Rückschaltung gültige Grenzwert als entsprechender Fahrzeuggeschwindigkeitswert in einem Steuergerät abgespeichert ist und wobei die während der Fahrt des Kraftfahrzeuges sich ändernde Fahrzeuggeschwindigkeit und die sich ändernde Fahrpedalstellung gemessen werden, **dadurch gekennzeichnet, dass** bei einer Soll-Hochschaltung von einem Quellgang in einen höheren Gang der Zielgang **dadurch** bestimmt wird, dass die aktuelle Fahrgeschwindigkeit zunächst mit dem Grenzwert der nächstliegenden Hochschaltschwelle oder der sich in dieser Hochschaltrichtung anschließenden nächsten Hochschaltschwellen solange verglichen wird bis die aktuelle Fahrzeuggeschwindigkeit geringer ist als der jeweilige Grenzwert der zuletzt überprüften Hochschaltschwelle, dass, wenn bei der zuletzt überprüften Hochschaltschwelle der niedrigere Gang dieser Hochschaltschwelle der gleichen Getriebeeingangswelle zugeordnet ist wie der Quellgang, dann die aktuelle Fahrzeuggeschwindigkeit mit dem Grenzwert der zuletzt überprüften Hochschaltschwelle korrespondierenden Rückschaltschwelle verglichen wird, und dass dann, wenn die aktuelle Fahrzeuggeschwindigkeit geringer ist als dieser Grenzwert der Rückschaltschwelle der niedrigere Gang dieser Rückschaltschwelle als Zielgang gewählt wird, aber wenn die aktuelle Fahrzeuggeschwindigkeit größer ist als der Grenzwert der Rückschaltschwelle der höhere Gang dieser Rückschaltschwelle als Zielgang gewählt wird.

## Claims

1. Method for carrying out gear shifts from a source gear to a target gear of a twin clutch transmission, with the twin clutch transmission having a plurality of gears which are distributed between two transmission input shafts, with sequentially directly successive gears being assigned to different transmission input shafts, in particular with the first transmission input shaft being assigned the first, third and/or fifth gear and the second transmission input shaft being assigned the second, fourth and/or sixth gear, with in each case one upshift and downshift threshold, specifically the limit value applicable for the respective upshift or downshift, which is defined as a function of the throttle pedal position, for each possible sequential gear change being stored as a corresponding vehicle speed value in a control unit, and with the vehicle speed which varies and the throttle pedal position which varies as the motor vehicle is travelling being measured, **characterized in that**, in the case of a nominal downshift from a source gear to a lower gear, the target gear is determined **in that** the present vehicle speed is initially compared with the limit value of the closest downshift threshold, or of the adjacent downshift thresholds in said downshift direction, until the present vehicle speed is higher than the respective limit value of the most recently checked downshift threshold, **in that**, if, at the most recently checked downshift threshold, the higher gear of said downshift threshold is assigned the same transmission input shaft as the source gear, then the present vehicle speed is compared with the limit value of the upshift threshold which corresponds to the most recently checked downshift threshold, and **in that**, when the present vehicle speed is higher than said limit value of the upshift threshold, the higher gear of said upshift threshold is selected as a target gear, but if the present vehicle speed is lower than the limit value of the upshift threshold, the lower gear of said upshift threshold is selected as a target gear.

2. A method for carrying out gear shifts from a source gear to a target gear of a twin clutch transmission, in particular according to Claim 1, with the twin clutch transmission having a plurality of gears which are distributed between two transmission input shafts, with sequentially directly successive gears being assigned to different transmission input shafts, in particular with the first transmission input shaft being assigned the first, third and/or fifth gear and the second transmission input shaft being assigned the second, fourth and/or sixth gear, with in each case one upshift and downshift threshold, specifically the limit value applicable for the respective upshift or downshift, which is defined as a function of the throttle pedal position, for each possible sequential gear change being stored as a corresponding vehicle speed value in a control unit, and with the vehicle speed which varies and the throttle pedal position which varies as the motor vehicle is travelling being measured, **characterized in that**, in the case of a nominal upshift from a source gear to a higher gear, the target gear is determined **in that** the present vehicle speed is initially compared with the limit value of the closest upshift threshold, or of the adjacent upshift thresholds in said upshift direction, until the present vehicle speed is lower than the respective limit value of the most recently checked upshift threshold, **in that**, if, at the most recently checked upshift threshold, the lower gear of said upshift threshold is assigned the same transmission input shaft as the source gear, then the present vehicle speed is compared with the limit value of the downshift threshold which corresponds to the most recently checked upshift threshold, and **in that**, when the present vehicle speed is lower than said limit value of the downshift threshold, the lower gear of said downshift threshold is selected as a target gear, but if the present vehicle speed is higher than the limit value of the downshift threshold, the higher gear of said downshift threshold is selected as a target gear.

## Revendications

1. Procédé pour passer d'un rapport source à un rapport cible d'une transmission à double embrayage, la transmission à double embrayage comportant plusieurs rapports répartis sur les deux arbres d'entrée de boîte de vitesses, les rapports des différents arbres d'entrée de boîte de vitesses se suivant directement de façon séquentielle étant associés, le premier arbre d'entrée de boîte de vitesses étant notamment associé au premier, troisième et/ou cinquième rapport et le deuxième arbre d'entrée de boîte de vitesses étant associé au deuxième, quatrième et/ou sixième rapport, un arbre pour passer à une vitesse supérieure et rétrograder de vitesse défini respectivement pour chaque changement de rapport séquentiel possible étant mémorisé en fonction de la position de pédale, notamment la valeur limite valable pour le passage à une vitesse supérieure ou la rétrogradation respective de vitesse sous la forme de la valeur de vitesse du véhicule correspondante dans un appareil de commande et la vitesse du véhicule variant pendant la conduite du véhicule automobile et la position de pédale variant étant mesurées, **caractérisé en ce que** pour une rétrogradation de consigne d'un rapport source dans un rapport inférieur, le rapport cible est déterminé **en ce que** la vitesse de conduite actuelle est d'abord comparée à la valeur limite de l'arbre de rétrogradation voisin ou des arbres de rétrogradation contigus dans cette direction de rétrogradation jusqu'à ce que la vitesse actuelle du véhicule soit supérieure à la valeur limite respective de l'arbre de rétrogradation vérifié en dernier lieu, **en ce que**, pour l'arbre de rétrogradation vérifié en dernier lieu, en ce le rapport le plus élevé de cet arbre de rétrogradation est associé au même arbre d'entrée de boîte de vitesses que le rapport source, puis la vitesse actuelle du véhicule est comparée à la valeur limite de l'arbre de passage à une vitesse supérieure correspondant à l'arbre de rétrogradation vérifié en dernier lieu et **en ce qu'**ensuite, lorsque la vitesse actuelle du véhicule est supérieure à cette valeur limite, l'arbre de passage à une vitesse supérieure du rapport le plus élevé de cet arbre de passage à une vitesse supérieure est choisi comme rapport cible, mais en ce que lorsque la vitesse actuelle du véhicule est plus limitée que la valeur limite de l'arbre de passage à une vitesse supérieure, le rapport inférieur de cet arbre de passage à une vitesse supérieure est choisi comme rapport cible.

2. Procédé pour passer d'un rapport source à un rapport cible d'une transmission à double embrayage, notamment selon la revendication 1, la transmission à double embrayage comportant notamment plusieurs rapports répartis sur deux arbres d'entrée de boîte de vitesses, les rapports se suivant directement de façon séquentielle étant associés à différents arbres d'entrée de boîte de vitesses, notamment le premier arbre d'entrée de boîte de vitesses étant associé au troisième et/ou cinquième rapport et le deuxième arbre d'entrée de boîte de vitesses étant associé au deuxième, quatrième et/ou sixième rapport, un arbre de passage à une vitesse supérieure et de rétrogradation défini en fonction de la position de pédale étant respectivement défini pour chaque changement de rapport séquentiel possible, notamment la valeur limite valable pour le passage à une vitesse supérieure et/ou la rétrogradation respective étant mémorisée comme la valeur de vitesse correspondante du véhicule dans un appareil de commande et la vitesse du véhicule variant pendant la conduite du véhicule automobile et la position de pédale variant étant mesurées, **caractérisé en ce qu'**en présence d'un passage à une vitesse supérieure de consigne d'un rapport source dans un rapport plus élevé, le rapport cible est déterminé **en ce que** la vitesse de conduite actuelle est d'abord comparée à la valeur limite de l'arbre de passage à une vitesse supérieure voisin ou des arbres de passage à une vitesse supérieure suivants dans cette direction de passage à une vitesse supérieure tant que la vitesse actuelle du véhicule est inférieure à la valeur limite respective de l'arbre de passage à une vitesse supérieure vérifié en dernier lieu, **en ce que** lorsque pour l'arbre de passage à une vitesse supérieure vérifié en dernier lieu, le rapport le plus bas est associé à l'arbre de passage à une vitesse supérieure, le même arbre d'entrée de boîte de vitesses que pour le rapport source est associé, puis la vitesse actuelle du véhicule est comparée à la valeur limite de l'arbre de rétrogradation correspondant à l'arbre de passage à une vitesse supérieure vérifié en dernier lieu et **en ce qu'**ensuite, lorsque la vitesse actuelle du véhicule est inférieure à la valeur limite de l'arbre de rétrogradation, c'est le rapport inférieur de cet arbre de rétrogradation qui est choisi comme rapport cible mais **en ce que** lorsque la vitesse actuelle du véhicule est supérieure à la valeur limite de l'arbre de rétrogradation, c'est le rapport supérieur de cet arbre de rétrogradation qui est choisi comme rapport cible.
